(19) Europäisches Patentamt
European Patent Office
Office européen des brevets

(11) Publication number: **0 384 272 A2**

# (12) EUROPEAN PATENT APPLICATION

(21) Application number: **90102840.7**

(51) Int. Cl.5: **C01F 7/47**

(22) Date of filing: **14.02.90**

(30) Priority: **24.02.89 US 315078**

(43) Date of publication of application:
**29.08.90 Bulletin 90/35**

(84) Designated Contracting States:
**AT BE CH DE ES FR GB GR IT LI LU NL SE**

(71) Applicant: **VEREINIGTE ALUMINIUM-WERKE AKTIENGESELLSCHAFT**
**Berlin - Bonn Postfach 2468**
**Georg-von-Boeselager-Strasse 25**
**D-5300 Bonn 1(DE)**

(72) Inventor: **Brown, Neil, Dr.**
**Friedrichstrasse 43**
**D-5300 Bonn 1(DE)**

(74) Representative: **Müller-Wolff, Thomas, Dipl.-Ing.**
**Vereinigte Aluminium-Werke AG**
**Georg-von-Boeselager-Strasse 25 Postfach 2468**
**D-5300 Bonn 1(DE)**

## (54) Improvements to the catalyzed oxidation of Bayer liquor organics.

(57) An improved method for oxidizing the organic carbon substances in the caustic aluminate liquor of the Bayer process under the influence of metal catalyst ions, whereby there is no net build-up of sodium oxalate or benzene carboxylates in the oxidized liquor. The method comprises the steps of heating the liquor to a temperature of 270-280° C; supplying, in an oxygen-containing gas, no more than the stoichiometric amount of oxygen necessary for the conversion of the organic carbon content of the liquor to inorganic carbon; rapidly oxidizing the low molecular weight organic substances present in the liquor, such as sodium acetate, thereby effecting a rapid rise in temperature into the range 290-320° C; holding the liquor under agitation within the temperature range 290°-320° C until an organic oxidation efficiency not exceeding 95% is achieved; rapidly cooling the oxidized liquor to conditions of atmospheric pressure at a temperature of approximately 95° C and recovering the metal catalyst ions along with precipitated aluminum hydroxide. The improved method has particular relevance to processes uaing a tube reactor and copper or a transition metal as the source of metal catalyst ions.

EP 0 384 272 A2

## IMPROVEMENTS TO THE CATALYZED OXIDATION OF BAYER LIQUOR ORGANICS

The present invention relates to an improved method for the catalyzed oxidation of the organic substances present in the caustic aluminate liquor of the Bayer process for the production of alumina from bauxite. The invention has particular relevance to processes for the production of alumina from bauxite using the tube reactor and copper ions as a metal catalyst.

It is well-accepted in the alumina industry that when organic matter in bauxite enters the caustic aluminate liquor of the Bayer process, it dissolves partially. The extent of dissolution depends on the conditions of pressure and temperature employed. The dissolved organics transform to a large number of soluble sodium organic compounds by oxidative degradation under the influence of the high caustic concentration of the liquor. In general, the higher the temperature of bauxite extraction the greater is the degree of organics degradation obtained.

At steady state, the organic carbon substances dissolved in Bayer liquor can be classified into three groups:

* the humic matter, i.e., freshly extracted high molecular weight material and its initial degradation products of molecular weight > 500;

* the 'building-block' organics, i.e., the intermediate degradation products of the large humic molecules, e.g., phenolic and benzene carboxylic acids;

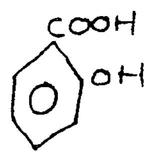

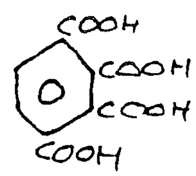

* low molecular weight degradation products such as sodium oxalate, sodium acetate and sodium formate. See, for example, G. Lever, "Identification of Organics in Bayer Liquor", Paper presented at 107th Annual Meeting of AIME, New York, 1978.

The ultimate degradation products are carbon dioxide and water. The $CO_2$ carbonates in part the free caustic content of the liquor which can then be causticized before returning it to the main process minus its original organic components.

It is well-established in the art that the oxidative degradation of the organic substances can be accelerated by supplying oxygen-containing gas under high temperature/high pressure conditions, particularly in the presence of copper catalyst ions. See, for example, J. Inao et al, "Method for the Removal of Organic Substances from Alkali Metal Aluminate Solution", U.S. Patent 4,215,094, July 29, 1980. N. Brown, et al, "Method for Removing Organic Substances from Caustic Aluminate Liquors", U.S. Patent 4,668,486, May 26, 1987. I. Fehér et al, "Removal of Organic Compounds During the Bayer Alumina Process", German Patent 29 45 152.3-41, July 21, 1988.

Copper catalyst ions have been shown to be particularly effective in oxidizing the low molecular weight organics such as acetate, succinate and formate as well as the high molecular weight humic type organic materials when using the stoichiometric amount of oxygen at a temperature of 260°C and retention time of 60 minutes. K. Yamada, T. Hirato and H. Kato, "Oxidation of Organic Substances in the Bayer Process", Paper presented at the 110th Annual Meeting of AIME, Chicago, 1981.

Organics oxidation, however is not without complications. Although after oxidation the overall organic carbon concentration in liquor may decrease substantially, some of the organic substances originally present may actually show an increased concentration in oxidized liquor. It is known, for example, that the organics oxidation reaction pathway proceeds in large part via the intermediate compound sodium oxalate which can form faster than it degrades with the result that, unless high organics oxidation efficiencies are achieved, the oxidized liquor can contain more sodium oxalate than the starting liquor. (See N. Brown et al, U.S. Patent 4,668,486). Because of the relatively low solubility of sodium oxalate in Bayer liquor, excess sodium oxalate would tend to crystallize in the $Al(OH)_3$ precipitation circuit creating process difficulties.

A further complication arises due to the presence in Bayer liquor of benzene carboxylic acids. In terms of high temperature/high pressure oxidation of organics, these materials are the most difficult to break down and since they are degradation products of still higher molecular weight organic carbon compounds, they can accumulate in oxidized liquor (Yamada et al, AIME, Chicago, 1981). A steadily increasing concentration

of difficult-to-oxidize benzene carboxylic acids would be expected to lead progressively to lower organics oxidation efficiencies.

The problems associated with accumulation of sodium oxalate and benzene carboxylic acids could be overcome by using very high temperatures (>300 °C) and an excess of oxygen over the stoichiometric requirement (see, Brown et al, U.S. Patent 4,668,486 and Fehér et al, German Patent 29 45 152.3-41).

Again, however, there are complications. The presence of some benzene carboxylic acids in oxidized liquor is desirable in order to maintain the stability of the metal catalyst ions in solution. Copper catalyst ions, for example, in the absence of benzene carboxylic acids, precipitate out of oxidized liquor as black copper (II) oxide. N. Brown, "The Effect of Copper Ions on the Crystallization of Bayer Aluminum Trihydroxide". J. Crystal Growth 87 (1988) 281. This creates difficulties for the catalyst recovery and recycle along with precipitated aluminum trihydroxide (Brown et al, U.S. patent 4,668,486).

Clearly, there are a number of technical and operational difficulties still associated with the organics oxidation process.

In technical terms, organics oxidation efficiencies must be high in order to ensure no net build-up of sodium oxalate or benzene carboxylic acids, but not so high that the metal catalyst ions are destabilized and precipitate out of the oxidized liquor due to a lack of the stabilizing benzene carboxylic acids.

The percieved need for an excess of oxygen gas over the stoichiometric amount to achieve the necessary high degree of organics oxidation is an added complication. To obviate this problem would require compensating high temperatures beyond the range of readily available equipment.

Most Bayer alumina plants use conventional autoclaves whether batch or continuous and operate at temperatures no higher than about 250 °C. The tube reactor system with its higher operating temperature capability and turbulent flow characteristics would appear to offer the best prospect for achieving the desired organics oxidation conditions with the associated degree of control.

Essentially, what is needed in the art is a means of obtaining the desired organics oxidation condition in the oxidized liquor, without the need for an excess of oxygen, at operating temperatures which are not beyond the reach of normal practice.

The present invention comprises a method for achieving the aforementioned technical objective. Moreover, the basis of the method directly exploits an inherent advantage of the tube reactor system over that of conventional batch or continuous autoclave systems.

According to the method of the present invention the organic carbon substances in the caustic aluminate liquor of the Bayer process are oxidized under the influence of metal catalyst ions. Using the method of the invention there is no net build-up of sodium oxalate or benzene carboxylates in the oxidized Bayer process liquor. The method comprises the steps of heating the caustic aluminate Bayer process liquor containing metal catalyst ions (e.g. copper ions) to a temperature of between about 270-280 °C; supplying the liquor with no more than the stoichiometric amount of oxygen necessary for the conversion of the organic carbon content of the caustic liquor to inorganic carbon with an oxygen-containing gas; rapidly oxidizing low molecular weight organic substances present in the liquor (such as sodium acetate) thereby effecting a rapid rise in the temperature of the liquor to between about 290° and about 320 °C; agitating the liquor while maintaining the temperature of the liquor between about 290° and about 320 °C until an organic oxidation efficiency not exceeding 95% is achieved; rapidly cooling the oxidized liquor to atmospheric pressure conditions at a temperature of approximately 95 °C and recovering the metal catalyst ions along with precipitated aluminum hydroxide. The improved method has particular relevance to Bayer process systems which are carried out in a tube reactor and which employ copper as the source of metal catalyst ions.

It is an object of the present invention to provide a method for oxidizing the organic substances that are present in the caustic aluminate Bayer process liquor in the presence of metal catalyst ions which avoids the buildup of sodium oxalate or benzene carboxylates in the oxidized liquor.

## BRIEF DESCRIPTION OF THE DRAWINGS

Fig. 1 is a schematic diagram of the tube reactor system of the present invention.

Oxidation of Bayer liquor organics converts organic carbon to carbon dioxide and water as ultimate degradation products. The carbon dioxide carbonates in part the free caustic content of the liquor which can then be causticized before returning it to the main process minus its original organic components. The organics oxidation reaction pathway however, proceeds substantially via the intermediate compound sodium oxalate and unless high organics oxidation efficiencies are achieved, the oxidized liquor will contain more sodium oxalate than the starting liquor.

Most Bayer plants using conventional autoclaves digest at temperatures no higher than 240 - 250 °C. This militates against a direct introduction of molecular oxygen gas into the digestion process since not only would it result in low organics oxidation efficiencies but also to a substantial increase in the sodium oxalate concentration of the liquor. Because of the relatively low solubility of sodium oxalate in Bayer liquor, excess sodium oxalate would tend to crystallize in the $Al(OH)_3$ precipitation circuits if not before, creating process difficulties.

Higher temperatures along with high agitation levels and the use of copper as oxidation catalyst are necessary to achieve the high organics oxidation efficiencies associated with low sodium oxalate levels in oxidized liquor. Quantitative recovery and recycle of the copper catalyst however requires that the organics oxidation be conducted in a side-stream operation.

The tube reactor system with its high operating temperature capability and turbulent flow characteristics is well-suited to the task of achieving the required high organics oxidation efficiencies. The technical and economic advantages of the tube reaction system in the digestion of bauxites are well-known.

The present invention is illustrated by the following series of examples.

## Example 1

In successive tests, 30 ml quantities of a Works liquor [1] (composition: $Na_2O$ free - 147 g/l; $Al_2O_3$ = 32.0 g/l; $Na_2O$ carbonate = 18.2 g/l; organic carbon = 32.0 g/l; sodium oxalate = 2.1 g/l; sodium acetate = 28.3 g/l) from the Bayer process were introduced into a 100 ml capacity stainless steel autoclave and heated with agitation (laminar flow) to a temperature of 300 °C under oxygen gas pressures ranging from 0-45 bar (or 0-45 x 105 Pa), as applied and measured at 25 °C, and in the presence of 500 mg/l copper, added as the equivalent amount of $CuSO_4 . 5H_2O$.

Reaction time at temperature was 20 minutes, all heat and agitation being provided externally. Although the organics oxidation reaction was carried out isothermally at 300 °C, the time required to heat to temperature was approx. 20 minutes. The time to cool the autoclave and contents back to a temperature of 95 °C was also of the order of 20 min.

Additionally, a series of comparative tests were carried out in which a total gas pressure of 45 bar (as measured at 25 °C) was maintained for various mixtures of oxygen and nitrogen. The results, given in Table 1, show the effect on the organics oxidation reaction of progressively replacing oxygen by nitrogen gas.

[1] Humic matter - approximately 2 g/l

TABLE 1

Organics Oxidation Using Oxygen And Oxygen / Nitrogen Mixtures with Copper Catalyst

Reaction Temperature / 300 °C; Reaction Time / 20 min.

| Gas Atmosphere (bar at 25 °C) | | $O_2/C$ Mole Ratio at Start | Organic Carbon (g/l) | Oxidation Efficiency (%) | Sodium Oxalate (g/l) |
|---|---|---|---|---|---|
| $O_2$ | $N_2$ | | | | |
| 40 | 0* | 1.4 | 17.8 | 44.5 | 32 |
| 40 | 0 | 1.4 | 6.2 | 80.7 | 4.7 |
| 45 | 0 | 1.6 | 5.4 | 83.2 | 3.2 |
| 35 | 0 | 1.3 | 7.9 | 75.2 | 9.1 |
| 35 | 10 | 1.3 | 5.0 | 84.3 | 2.8 |
| 25 | 0 | 0.92 | 22.4 | 30.0 | 29 |
| 25 | 20 | 0.92 | 10.4 | 67.6 | 14 |
| 25 | 20* | 0.92 | 21.1 | 34.2 | 33 |
| 10 | 0 | 0.37 | 27.4 | 14.4 | 16 |
| 10 | 35 | 0.37 | 27.4 | 14.4 | 15 |
| 0 | 45 | 0.00 | 30.3 | 5.25 | 6.3 |

* No Copper Added

In general, the results indicate that the excess oxygen required to lower sodium oxalate concentration back to a level similar to that of the starting liquor can be replaced by nitrogen without adversely affecting oxidation efficiency. At low starting $O_2/C$ molar ratios, however, the positive effect of added nitrogen gas is not evident.

Although the $Cu^{2+}$ ion is virtually insoluble in the caustic aluminate liquor of the Bayer process at temperatures of approx. 60 °C (i.e., spent liquor temperature), copper is solubilized at the high temperatures and pressures used in organics oxidation. Copper concentrations of the order of 450-500 mg/l were measured in well-oxidized liquors, which were blue in color and essentially solids free.

If the organics oxidation reaction is represented as follows:

$$(-\ CHO\ -)\ n\ +\ O_2 \xrightarrow{Cu^{2+}} n\ CO_2\ +\ n\ H_2O$$

$$Cu^{+}\ +\ 1/2\ O_2 \longrightarrow Cu\ O$$

then the intermediate reduced form of the metal catalyst, i.e., $Cu_2O$, requires the presence of soluble molecular oxygen to reoxidize back to CuO from which state it can participate further in the organics oxidation reaction.

Example 2

The tests described in Example 1 were repeated using cobalt, added in amounts up to 750 mg/l equivalent $CoCl_2.6H_2O$, as the source of metal catalyst ions. The results, given in Table 4, show that cobalt is effective as an organics oxidation catalyst when an excess of oxygen over the stoichiometric requirement is used. Replacing the excess oxygen with nitrogen confirms that similar organics oxidation efficiencies can be obtained indicating that the solubility of oxygen in Bayer liquor is a function of the total gas pressure at a given temperature.

TABLE 2

| Organics Oxidation Using Oxygen and Oxygen/Nitrogen Mixtures With Cobalt Catalyst. | | | | | | |
|---|---|---|---|---|---|---|
| Reaction Temperature = 300° C; Reaction Time = 20 min. | | | | | | |
| Gas Atmosphere | | Cobald Added | $O_2$/C | Organic Carbon | Oxidation Efficiency | Sodium Oxalate |
| (bar at 25° C) | | (mg/l) | Mole Ratio At Start | (g/l) | (%) | (g/l) |
| $O_2$ | $N_2$ | | | | | |
| 40 | 0 | 0 | 1.4 | 17.8 | 44.5 | 32 |
| 40 | 0 | 250 | 1.4 | 11.6 | 63.7 | 13.7 |
| 40 | 0 | 500 | 1.4 | 11.3 | 64.8 | 15.1 |
| 45 | 0 | 750 | 1.6 | 12.8 | 60.0 | 19.2 |
| 30 | 0 | 750 | 1.1 | 15.4 | 51.9 | 25.0 |
| 30 | 15 | 750 | 1.1 | 13.0 | 59.4 | 21.6 |
| 20 | 0 | 0 | 0.74 | 23.0 | 28.1 | 25.5 |
| 20 | 0 | 750 | 0.74 | 21.6 | 32.6 | 28.3 |
| 20 | 25 | 750 | 0.74 | 18.8 | 41.1 | 33.5 |
| 10 | 0 | 750 | 0.37 | 28.2 | 11.8 | 10.2 |
| 10 | 35 | 750 | 0.37 | 28.0 | 12.5 | 9.7 |
| 0 | 45 | 750 | 0.00 | 31.4 | 1.8 | 3.5 |

The maximum concentration of cobalt measured in oxidized liquor was of the order of 150 mg/l. All of the liquors after organics oxidation contained black solids identified as $Co_2O_3$ by X-ray diffraction. The intermediate reduced form CoO was present when the starting $O_2$/C molar ratio was low, i.e., 0.37.

The apparent low solubility of $Co_2O_3$ would account to some extent for the poorer catalytic effect of cobalt compared to that of copper and suggests that cobalt does not complex as readily with soluble organics as does copper.

## Example 3

In four successive tests, 11 quantities of a Works liquor [2] composition: $Na_2O$ free = 133 g/l; $Al_2O_3$ = 83.1 g/l; $Na_2O$ carbonate = 19.1 g/l; benzene carboxylates = 7.2g/l (C = equivalent) were oxidized in a 31 - Inconel autoclave fitted with a permanent magnetic stirrer operated at a rotation rate of 1000 RPM providing turbulent flow with a Reynolds Number of about $2x10^5$.

The tests were carried out isothermally at temperatures in the range 260-320° C with a retention time of 40 min. at temperature.

To begin an experiment, 1 liter of liquor was added to the autoclave at about 25° C and oxygen gas introduced up to a pressure of 30 bar. The system was then heated to a reaction temperature of 260-320° C without agitation. As soon as the reaction temperature was reached, all heat to the system was cut off and agitation commenced. The stirring rate was then raised as quickly as possible to 1000 RPM while maintaining the reaction isothermal by utilizing the heat of reaction (approximately 39 KJ g-1 organic carbon converted to inorganic carbon).

Copper sulphate was used as the source of copper ions, added at a concentration of 500 mg/l Cu.

The results obtained are given in Table 5. These show that organics oxidation is strongly temperature dependent. However, when using virtually the stoichiometric amount of oxygen, it is only within the temperature range 300 - 320° C that the sodium oxalate concentration falls back to the levels approaching that of the starting liquor.

[2] Humic matter approximately 1 g/l

After organica oxidation at 260 °C, the concentration of benzene carboxylates shows a significant increase over the amount present in the starting liquor. The concentration then decreases with increasing temperature and at a temperature of approx. 290 °C (by interpolation) the concentration of benzene carboxylates in oxidized liquor approximates that of the starting liquor.

Except for the liquor oxidized at 260 °C, the oxidized liquors were unstable with respect to precipitation of aluminum hydroxide. Either boehmite ($\alpha$ -$Al_2O_3$ - $H_2O$) precipitated hydrothermally in the autoclave during cooling back to about 95 °C or bayerite ($\beta$ -$Al_2O_3$) precipitated under conditions of atmospheric pressure and temperature. In either case, the copper catalyst ions crystallized with the aluminum hydroxide and could be recycled as such.

When copper ions coprecipitate with aluminum hydroxide, the blue colour of the oxidized liquor is transferred to the solid state materials.

TABLE 3

| Organics Oxidation as a Function of Temperature with Copper Catalyst | | | | |
|---|---|---|---|---|
| Reaction Time = 40 min. | | | | |
| Temperature | Organic Carbon | Oxidation Efficiency | Benzene Carboxylates | Sodium Oxalate |
| (°C) | (g/l) | (%) | (g/l) | (g/l) |
| Start Liquor | 32.4 | - | 7.2 | 2.3 |
| 260 | 17.8 | 44.3 | 9.2 | 31.5 |
| 280 | 13.9 | 56.6 | 8.0 | 23.2 |
| 300 | 7.4 | 76.8 | 6.1 | 8.6 |
| 320 | 2.4 | 92.5 | 3.8 | 0.1 |

## Example 4

A further series of tests were carried out with a Works liquor [3] of the following composition ($Na_2O$ free 137 g/l; $Al_2O_3$ 79.2 gl/l; $Na_2O$ carbonate 14.6 g/l; benzene carboxylates 2.4 g/l).

The liquor was oxidized under turbulent flow conditions at 300 °C for 40 min. using the same equipment described in Example 3. Isothermal conditions were employed. Oxygen amount was varied and 500 mg/l Cu used as catalyst.

The results are given in Table 4.

[3] Humic matter approximately 1 g/l

TABLE 4

| Organics Oxidation under Isothermal Conditions with Turbulent Flow at 300 °C as a Function of Oxygen Amount/Pressure using Copper as Catalyst (500 mg/l Cu). | | | | | | |
|---|---|---|---|---|---|---|
| Oxygen Pressure | $O_2$/C | Organic Carbon | Oxidation Efficiency | Sodium Oxalate | Sodium Acetate | Benzene Carboxylate Acids |
| (bar at 25 °C) | Mole Ratio | (g/l) | (%) | (g/l) | (g/l) | (g/l) |
| Starting Liquor | - | 17.0 | - | 2.3 | 14.6 | 2.4 |
| 7.5 | 0.5 | 10.3 | 39.4 | 12 | 9.2 | 2.9 |
| 15.0 | 1.0 | 3.4 | 80.0 | 2.4 | 0.2 | 1.8 |
| 22.5 | 1.5 | 1.0 | 94.1 | 0.2 | 0.2 | 0.3 |

The Table 4 results show the importance of supplying at least the stoichiometric amount of oxygen at a temperature 300 °C in isothermal experiments. When an excess of oxygen was added, the copper catalyst precipitated out of the oxidized liquor as it cooled to atmospheric pressure conditions and a temperature of ca. 95 °C. This is consistent with the very low concentration of benzene carboxylates remaining in the oxidized liquor.

In general, the organics oxidation efficiencies are significantly higher when using this liquor of lower organic carbon and, more importantly, lower concentration of benzene carboxylates.

Example 5

In these tests, Works liquor of the same composition as that in Example 4 was oxidized but this time under non-isothermal condition. This was achieved by switching the agitator to 1000 RPM as soon as the starting temperature was reached. The heat of reaction was then allowed to increase the temperature until it reached a maximum, which occurred within the first 5 minutes. Thereafter, external heat was applied to control the cooling rate according to the desired temperature profile. The results are given in Table 5.

TABLE 5

| Organics Oxidation Under Non-Isothermal Conditions with Copper (500 mg/l) as Catalyst. | | | | | | | | | |
|---|---|---|---|---|---|---|---|---|---|
| Reaction Time = 40 minutes | | | | | | | | | |
| Oxygen Pressure | O 2/C | Start Temp. | Max m. Temp. | End Temp. | Organic Carbon | Oxidation Efficiency | Sodium Oxalate | Sodium Acetate | Benzene Carboxylate |
| (bar at 25 °C) | Mole Ratio | (°C) | (°C) | (°C) | (g/l) | (%) | (g/l) | (g/l) | (g/l) |
| START LIQUOR | - | - | - | - | 17.0 | - | 2.3 | 14.6 | 2.4 |
| 7.5* | 0.5 | 289 | 305 | 298 | 6.2 | 63.5 | 10.2 | 3.2 | 2.7 |
| 7.5 | 0.5 | 290 | 304 | 300 | 10.6 | 38.2 | 8.7 | 6.6 | 2.9 |
| 15 | 1.0 | 278 | 297 | 290 | 2.9 | 82.9 | 2.8 | 0.2 | 2.1 |
| 15** | 1.0 | 285 | 295 | 290 | 10.3 | 39.4 | 14 | 10 | 3.1 |

* 15 bar $N_2$ added

** No Copper added

On balance, there appears to be little overall improvement in organics oxidation when carrying out the

tests non-isothermally as opposed to isothermally (compare with the data in Table 4, Example 4). This conclusion, however, could be a function of the relatively long retention time of 40 minutes compared with the fact that the maximum liquor temperatures were all recorded within 5 minutes of starting the reaction. The results, however, confirm that a temperature of at least 290 °C and the presence of at least the stoichiometric amount of oxygen are necessary to lower sodium oxalate back to a concentration level approximately that of the starting liquor and to obtain a net decrease in concentration of the benzene carboxylates.

The results in Table 3 also confirm the positive effect of supplementing the oxygen with nitrogen gas to raise the total pressure of the system, and better utilize the oxygen used.

Organics oxidation in the absence of a copper catalyst, even with the stoichiometric amount of oxygen, delivers relatively poor results confirming that copper catalyst is necessary to achieve the aims of the present invention.

## Example 6

The test carried out in Example 5 using the stoichiometric amount of oxygen was repeated under the same conditions except that this time samples were removed from the autoclave during the 40 minutes overall reaction period. The same analyses were carried our on the samples as in Example 5 . The results are set forth in Table 6.

TABLE 6

| Organics Oxidation Under Non-Isothermal Conditions as a Function of Time with Copper as Catalyst (500 mg/l Cu) and Using the Stoichiometric Amount of Oxygen | | | | | | |
|---|---|---|---|---|---|---|
| Start Temperature = 279 °C<br>Maximum Temperature = 300 °C<br>End Temperature = 289 °C | | | | | | |
| Time | Temperature | Organic Carbon | Oxidation Efficiency | Sodium Oxalate | Sodium Acetate | Benzene Carboxylates |
| (min) | (°C) | (g/l) | (%) | (g/l) | (g/l) | (g/l) |
| START LIQUOR | - | 17.0 | - | 2.3 | 14.6 | 2.4 |
| 5 | 300 | 10.1 | 40.6 | 10.7 | 1.6 | 2.6 |
| 10 | 297 | 7.5 | 55.9 | 15.7 | 0.2 | 2.6 |
| 20 | 293 | 4.9 | 71.2 | 11.4 | 0.2 | 2.1 |
| 40 | 289 | 2.1 | 87.6 | 2.7 | 0.2 | 1.2 |

The Table 8 results show clearly that the rapid initial rise in temperature during organics oxidation is due to the fast degradation of low molecular weight organics such as sodium acetate (sodium succinate and sodium formate behave similarly although present in lower concentrations - each are present at about 4 g/l expreased as the sodium salt). The benzene carboxylates however require longer at temperature to show a net degradation. It should be remembered of course that the major part of the oxygen gas is utilized in oxidizing the low molecular weight substances. The pressure of the system drops accordingly and presumably the solubility of molecular oxygen which therefore adds to the difficulty of degrading the benzene carboxylates.

## Example 7

Works spent liquor of the following average composition ($Na_2O$ free = 128 g/l; $Al_2O_3$ = 70.0 g/l; $Na_2O$ carbonate = 23.2 g/l; organic carbon = 15 g/l; sodium oxalate = 2.1 9/l) from the Bayer process was oxidized in a continuously operated tube reactor system.

A schematic diagram of the tube reactor system is shown in Figure 1. The serpentine reaction zone (1) of the tube reactor was approximately 1000 m in length and had an average inside diameter of 22 mm. The reaction zone construction material was a titanium alloy (0.2 % $PdO_2$).

Operating parameters were controlled within the following ranges:

| | |
|---|---|
| Reactor throughput | 1-2 $m^3 h^{-1}$ |
| Flow velocity | ca. 1.5 $ms^{-1}$ |
| Retention time | 32-40 minutes |
| Amount of oxygen | 10-12 N $m^3 h^{-1}$ |

The Bayer process liquor is pumped through the reaction zone (1) under high pressure and at high pressure. High pressure steam (5) is used to heat the temperature of the incoming liquor to approximately 270 °C. Thereafter, the higher temperatures in the reaction zone were obtained by using the heat of the organics oxidation reaction. Essentially, the Bayer liquor to be oxidized (2) was heated to a temperature of 270-280 °C while being pumped, by means of a diaphragm piston pump (3), to the reaction zone (1) under pressure. (At this temperature, the pressure drop across the reactor was 25-30 bar).

The amount of oxygen introduced into the reaction zone at a partial pressure of at least 30 bar was no more than 50% of the stoichiometric amount necessary to convert the organic carbon content of the liquor to inorganic carbon. This was the largest amount of oxygen which could be used with the existing equipment.

The higher temperatures (in the range 290-320 °C) were obtained, as in the laboratory batch autoclave, by utilizing the exothermic organics oxidation reaction (the heat of reaction was estimated to be about 30 KJ $g^{-1}$ organic carbon converted to inorganic carbon). The heat in the reactor outflow was transferred to the incoming liquor within the inner conduit of the double tube preheater. The temperature of the liquor leaving the heat recuperation section (4) was of the order of 200 °C. The oxidized liquor was then flashed directly to atmosphere.

The experiments in the continuously operated tube reactor were thus carried out non-isothermally. The turbulent flow in the reactor corresponded to a Reynolds Number of 1-2 x $10^5$. Temperature measurements were made at 12 points across the reaction zone i.e., at approx. 3 min. retention time intervals. The behavior of the system was similar to that observed in the laboratory work i.e., immediately after the introduction of oxygen gas, there was a rise in temperature up to approximately 320 °C followed by a relatively slow decline to give a subsequent drop of 15-20 °C from the maximum temperature recorded within the overall retention time.

Accumulated data over a period of several months operation gave the following results corresponding to a maximum temperature of 305 °C when using copper (500 mg/l) as the catalyst, added as $CuSO_4 . 5 H_2O$.

Organic carbon = 5.7 g/l

Oxidation efficiency = 62%

Sodium oxalate = 14 g/l

These results should be compared with those obtained in non-isothermal experiments in the laboratory batch autoclave (see Table 7, Example 5).

On a straight comparison, the tube reactor delivers oxidation efficiencies that are approximately 50% higher than the laboratory batch experiments carried out as far as possible under simulated tube reactor conditions (i.e., turbulent flows non-isothermal conditions). However, with the addition of 15 bar $N_2$ to the 7.5 bar oxygen introduced to the laboratory batch autoclave, an oxidation efficiency of 63.5% was obtained confirming that the higher pressure characteristics of the tube reactor are responsible for the better than expected oxidation efficiencies.

## Example 8

In this Example, 1 liter of Works liquor [4] of the following composition ($Na_2O$ free = 134 g/l; $Al_2O_3$ = 81.8 g/l; $Na_2O$ carbonate = 19.3 g/l; organic carbon = 32.2 g/l; sodium oxalate = 2.7 g/l; sodium acetate

[4] Humic matter - about 2 g/l

= 29.5 g/l; benzene carboxylates = 7.0 g/1) was oxidized in a 3 liter - Inconel laboratory batch autoclave under non-isothermal conditions with turbulent flow. Samples for analyses were removed as a function of time. Overall retention time was 40 minutes and the stoichiometric amount of oxygen was used. The results of this experiment are shown in Table 7.

TABLE 7:

| Organics Oxidation Under Non-Isothermal Conditions as a Function of Time with Copper (500 mg/l) as Catalyst and Using the Stoichiometric Amount of Oxygen. | | | | | | |
|---|---|---|---|---|---|---|
| Start Temperature 275° C<br>Maximum Temperature 315° C<br>End Temperature 290° C | | | | | | |
| Time | Temperature | Organic Carbon | Oxidation Efficiency | Sodium Oxalate | Sodium Acetate | Benzene Carboxylates |
| (min) | (° C) | (g/l) | (%) | (g/l) | (g/l) | (g/l) |
| START LIQUOR | | 32.2 | | 2.7 | 29.5 | 7.0 |
| 5 | 309 | 9.1 | 68.6 | 10.4 | 2.7 | 6.5 |
| 10 | 295 | 8.8 | 73.1 | 7.3 | 0.2 | 5.8 |
| 20 | 293 | 6.1 | 81.6 | 2.9 | 0.2 | 4.8 |
| 40 | 290 | 5.1 | 84.7 | 2.3 | 0.2 | 4.7 |

The results indicate that the initial rapid rise in temperature is related to the organic carbon concentration of the liquor-to-be-oxidized, more particularly the concentration of readily oxidizable low molecular weight organic substances such as sodium acetate.

Also, when the stoichiometric amount of oxygen is used, and the initial temperature lies in the range 300-320° C, there is no net build-up of benzene carboxylates even at the shortest reaction time of 5 minutes.

Thus, the present invention provides an improved method for the catalytic oxidation of Bayer liquor organics whereby no more than the stoichiometric amount of oxygen gas is necessary to obtain low sodium oxalate concentration in oxidized liquor and there is no net build-up of benzene carboxylates.

An optimum temperature-time profile is identified whereby the heat of organics oxidation is exploited to raise reaction temperature into the 290-320° C temperature range where the organics that are most difficult to oxidize (i.e., the benzene carboxylates) show a net degradation without ever eliminating them.

Under certain circumstances, transition metals other than copper (e.g. iron, nickel, manganese, chrome, and titanium) may be used to accelerate the organics oxidation reaction. However, copper is very likely to be the best catalyst available due its high apparent solubility and redox behavior under the high temperature/high pressure conditions of organics oxidation. Copper complexes with soluble organics through the oxygen-containing carboxyl groups of the benzene carboxylates (the hydroxyl groups of phenolics are similarly effective; the phenolics however oxidize much more readily than the benzene carboxylates). It is therefore important not to over-oxidize the organics in Bayer liquor in order to maintain the copper catalyst ions in oxidized liquor prior to their controlled recovery with precipitated aluminum hydroxide. An inherent advantage of the present invention is that overshoot of organics oxidation is rendered difficult, even at temperatures of approximately 300° C, because the oxygen gas pressure decreases during organics reaction. Thus, the most difficult-to-oxidize organics, the benzene di- and tricarboxylates readily withstand the relatively poor oxidation conditions. In this respect, the organics oxidation process of the invention is largely self controlling provided the stoichiometric amount of oxygen is applied. The five percent (5%) of organics which do not oxidize, are in fact the most difficult to oxidize doubly so because the partial pressure of the oxygen gas remaining is too low to oxidize them at the time and temperature involved. If oxidation efficiencies greater than 95% are achieved, then copper begins to crystallize out as black copper (II) oxide, when copper is initially added at the 500 mg/l level. Hence, the oxidized liquor should contain at least 1 g/l organic carbon.

The improved method of the present invention has particular relevance to the tube reactor system with its inherent high operating pressures and high temperatures capability. In practical terms, air could be used as the oxygen-containing gas if the liquor to be oxidized has an organic carbon content of less than about

20 g/l. Above this organic carbon level pure molecular oxygen gas is necessary at least admixed with air.

Consequently, the method of the present invention has large scale industrial benefits.

## Claims

1. A process for oxidizing organic substances present in caustic aluminate bayer process liquor which comprises:
exposing said liquor to a metal catalyst ion,
preheating said liquor to between about 270° C and about 280° C for a first predetermined time period,
introducing into said liquor an oxygen containing gas while simultaneously allowing the temperature of said liquor to rise to between about 290° C and 320° C, said gas supplying no more than the stoichiometric amount of oxygen required to convert the organic carbon substances in said liquor to inorganic carbon,
maintaining the liquor at a temperature between about 290° C and about 320° C until the concentration of sodium oxalate and benzene carboxylates in said liquor is the same as the concentration of said oxalate and carboxylates in said liquor prior to said preheating step.

2. The process of claim 1 wherein said catalyst ion is a transition metal.

3. The method according to one of the prior claims wherein said catalyst ion is copper.

4. The method according to one of the prior claims which comprises adding said copper to said liquor in the form of copper sulfate.

5. The method according to one of the prior claims wherein the first predetermined time period is between about 1 and about 3 minutes.

6. The method according to one of the prior claims which comprises holding said liquor in the temperature range between about 290° C and abcut 320° C for between about 5 and about 35 minutes.

7. The method according to one of the prior claims which comprises introducing said metal catalyst to said liquor prior to preheating said liquor to 270° C.

8. The method according to one of the prior claims which comprises removing said metal catalyst from said liquor at a temperature of less than 290° C.

9. The process according to one of the prior claims wherin said oxidized liquor contains at least one gram per liter of an oxygen containing functional group selected from carboxyl, phenolic and hydroxyl groups.

10. The process according to one of the prior claims which comprises the steps of cooling said oxidized liquor to approximately 100° C over a period of between about 1 and about 3 minutes by conducting heat escaping from said oxidized liquor into said bayer process liquor, prior to preheating said bayer process liquor.

11. The process according to one of the prior claims which comprises removing said oxidized liquor from said heat exchange operation, and flash cooling said liquor to ambient temperature and atmospheric pressure.

12. An apparatus for oxidizing organic carbon substances present in the caustic aluminate liquor of the bayer process under the influence of metal ions which comprises a preheater, said preheater being connected to a high temperature heater, said high temperature heater being connected to a reaction zone, the length of said preheater segment, said high temperature heater segment and said reaction zone section being in the ratio of from 1:1:5 to 1:2:10.

13. A method for oxidizing the organic carbon substances present in caustic aluminate bayer process liquor under the influence of metal catalyst ions which comprises
heating said caustic aluminate liquor to a temperature of between about 270° C and 280° C;
introducing a predetermined quantity of an oxygen containing gas to said liquor, said oxygen containing gas supplying no more than the stoichiometric quantity of oxygen required to convert the organic carbon substances in said liquor to inorganic carbon,
rapidly oxidizing the low molecular weight organic substances present in said liquor thereby raising the temperature of said liquor to between about 290° C and 320° C,
vigorously agitating said liquor while holding said liquor at a temperature between about 290° C and about 320° C until up to 95% of the organic carbon substances in said liquor have been oxidized,
rapidly cooling the oxidized liquor to atmospheric pressure and to a temperature of about 95° C, and
recovering the metal catalyst ions along with precipitated aluminum hydroxide.

14. The method according to one of the prior claims wherein said metal catalyst is copper.

15. In a method for oxidizing the organic carbon substances in the caustic aluminate liquor of the Bayer process the improvement which comprises

preheating said bayer process liquor to a temperature of between about 270 °C and 280 °C,
delivering a predetermined quantity of an oxygen containing gas to said liquor, said gas containing up to the stoichiometric quantity of oxygen required to convert said organic carbon substances to inorganic carbon,
raising the temperature of said liquor to between about 290 °C and 320 °C,
agitating said liquor while holding said liquor at a temperature of between about 290 °C and 320 °C until up to 95% of said organic carbon substances have been oxidized, and
rapidly cooling the oxidized liquor.

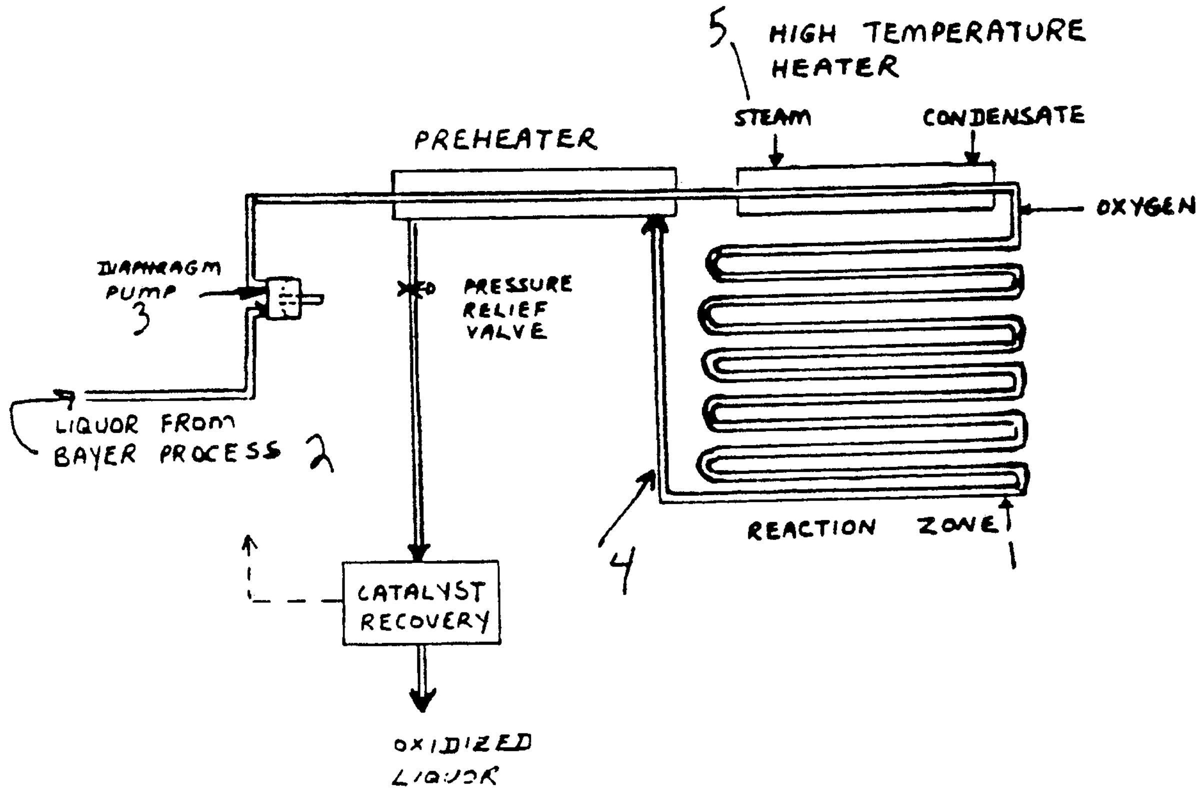


FIGURE 1: SCHEMATIC DIAGRAM OF TUBE REACTOR SYSTEM